# EUROPEAN PATENT APPLICATION

(11) **EP 1 874 015 A2**
(43) Date of publication of application: **02.01.2008**
(21) Application number: 07111096.9
(22) Date of filing: 27.06.2007
(51) Int. Cl.: H04M 1/725

(54) **External device for a portable terminal**

(30) Priority: 28.06.2006 KR 20060058927
(71) Applicant: Samsung Electronics Co., Ltd., Suwon-si Gyeonggi-do (KR)
(72) Inventor: Yun, Joon-Ki, Gyeonggi-do (KR); Kim, Hyun-Seop, Gyeonggi-do (KR); Hwang, Chang-Hwan, Gyeonggi-do (KR)
(74) Representative: Zimmer, Franz-Josef

(57) **Abstract**

Provided is an external device which is constructed in a manner such that a connection terminal can be exposed to or hidden from the outside by rotating an external module having the connection terminal. The external device includes an external module having a connection terminal; and a module housing for rotatably accommodating the external module, and having an opening on a side thereof, so that, by rotating the external module about a hinge axis, the connection terminal can be exposed to the outside through the opening or drawn into the module housing to be hidden from the outside.

## Description

The present invention relates generally to an external device, and in particular, to an external device which is constructed in a manner such that a connection terminal can be exposed to or hidden from the outside by rotating an external module having the connection terminal.

As is well known in the art, a portable terminal refers to an electronic device, which can implement wireless communication with a counterpart while being carried by a user. In consideration of portability, the trend of portable terminal is towards miniaturization, slimness, comfortable grip and lightweight, and the portable terminal has been developed as a multimedia system capable of performing various functions.

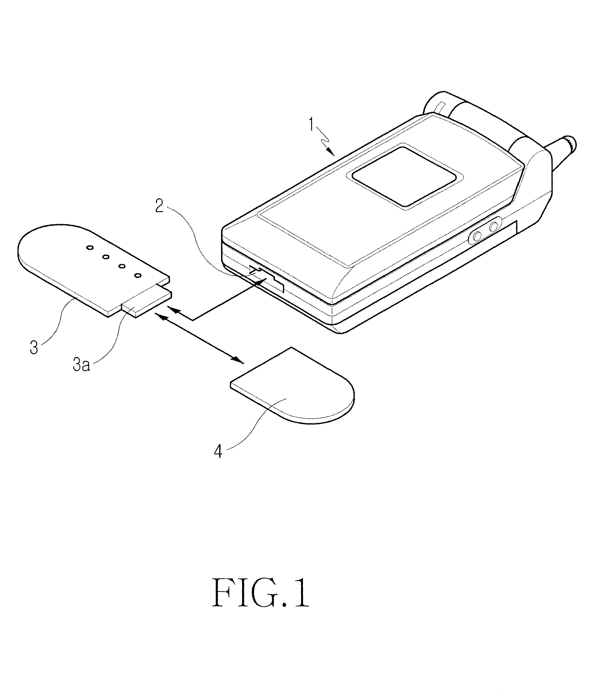

Referring to FIG. 1, a portable terminal 1 has a separate terminal for data communication or an interface connector 2 on the lower end of a terminal body, and a separate external device 3 is used for storage and transmission of data or for functioning as a modem.

In order for the external device 3 to support the storage and transmission of data or to function as a modem, a separate Universal Serial Bus (USB) cable is required. The USB cable is connected to a USB port, which is provided to connect to a Personal Computer (PC) or a notebook. At this time, a driver for recognizing the external device 3 must be installed on the PC or the notebook.

As shown in FIG. 1, the portable terminal 1 uses the separate external device 3. The external device 3 has a connection terminal 3a, which is connected to the interface connector 2 of the portable terminal 1. When the connection terminal 3a is not in use, it may always be exposed to the outside, or can be protected by a removable cover 4.

In light of the rapid development of wireless Internet technologies, as a portable terminal no longer only serves as a modem for providing a wireless Internet communication basis, and users now demand multimedia functions of the portable terminal over the modem function.

Currently, as a digital camera having more than ten million pixels has been mounted to a portable terminal and a micro camcorder having a video recording function is built into the portable terminal, the memory size of the portable terminal has become insufficient to store high quality images or moving pictures.

The current portable terminal also may have an M-commerce function. The term "M-commerce" represents an exchange of information service products using business model wireless data communication equipment, which provides services such as banking service and ticketing service through a personal digital assistant, a mobile terminal, etc.

Therefore, in order to make these functions possible, the capacity of the memory of the portable terminal must be increased, and therefore, the separate external device 3 has been required.

However, in the case where the external device is built into the portable terminal, the size of the portable terminal is increased. Further, in the case where a separate external device is provided, since the external device is held separately from the portable terminal, portability thereof deteriorates.

Also, because the connection terminal of the external device, which is to be connected with the portable terminal, is exposed to the outside, the connection terminal is likely to be broken. In the case of using the removable cover for protecting the connection terminal, the removable cover is likely to be lost since the removable cover must be removed from the external device every time the external device is used.

Accordingly, the present invention has been made to solve the above-mentioned problems occurring in the conventional art. It is the object of the present invention to provide an external device, which is constructed in a manner such that a connection terminal can be exposed to or hidden from the outside by rotating an external module having the connection terminal, thereby preventing damage of the connection terminal and other component parts and improving the commercial value of the external device.

This object is solved by the subject matter of the independent claims.

Preferred embodiments are defined in the dependent claims.

An aspect of the present invention is to provide an external device which is constructed in a manner such that a connection terminal can be exposed to or hidden from the outside by rotating an external module having the connection terminal, thereby obviating the need for a separate removable cover which is otherwise provided in the conventional art to protect the connection terminal and reducing a manufacturing cost of the external device.

Another aspect of the present invention is to provide an external device which has a connection member so that the external device can be conveniently carried by being connected to a main terminal (portable terminal) through the connection member and can serve as the accessory of the main terminal.

A further aspect of the present invention is to provide an external device, which has clicking means, so that a click feeling is provided when an external module is rotated, thereby improving the operation effect of the external device.

In order to achieve the above, according to the present invention, there is provided an external device including an external module having a connection terminal; and a module housing for rotatably accommodating the external module, and having an opening on a side thereof, so that, by rotating the external module about a hinge axis, the connection terminal can be exposed to the outside through the opening or drawn into the module housing to be hidden from the outside.

The present invention will be more apparent from the following detailed description when taken in conjunction with the accompanying drawings, in which:
FIG. 1 is a perspective view illustrating an in-use state of a conventional external device;
FIG. 2 is an exploded perspective view illustrating the construction of an external device in accordance with the present invention;
FIG. 3 is a perspective view illustrating an in-use state of the external device in accordance with the present invention before an external module is rotated;
FIG. 4 is a plan view illustrating the in-use state of the external device in accordance with the present invention before the external module is rotated;
FIG. 5 is a perspective view illustrating an in-use state of the external device in accordance with the present invention while the external module is rotated;
FIG. 6 is a plan view illustrating the in-use state of the external device in accordance with the present invention while the external module is rotated;
FIG. 7 is a perspective view illustrating an in-use state of the external device in accordance with the present invention after the external module is rotated; and
FIG. 8 is a perspective view illustrating an in-use state of the external device in accordance with the present invention, in which the external module is connected to a main device.

Hereinafter, preferred embodiments of the present invention will be described with reference to the accompanying drawings. In the following description, the same elements will be designated by the same reference numerals although they are shown in different drawings.

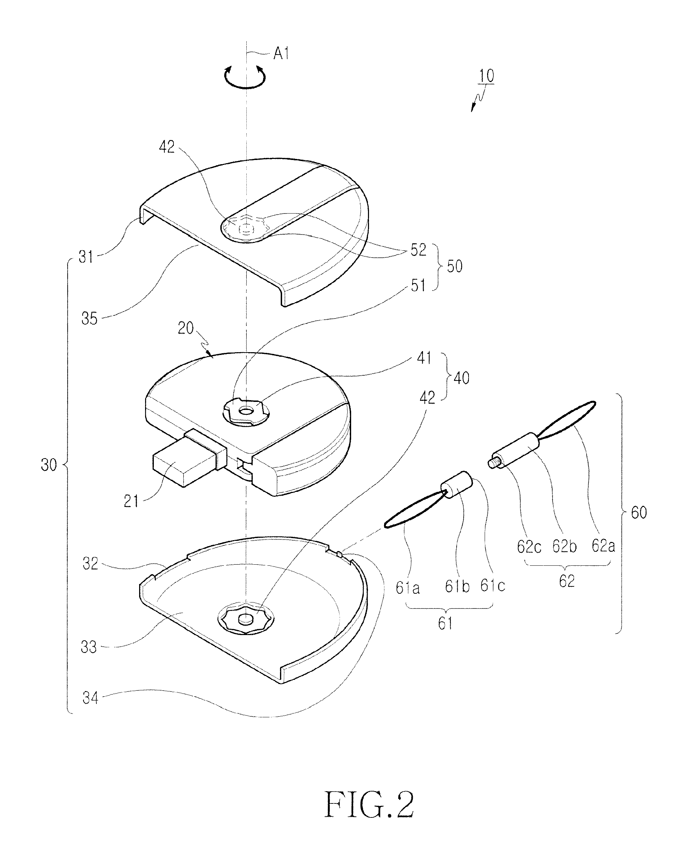

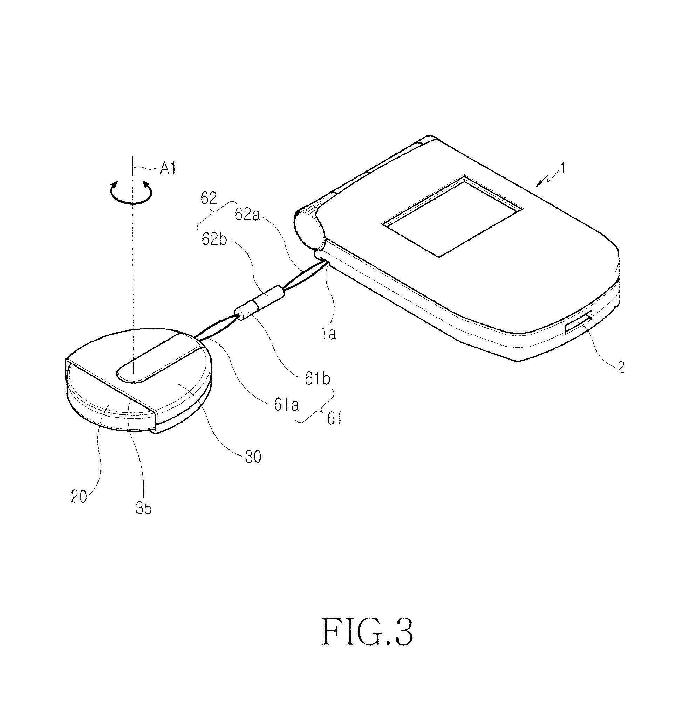

Referring to FIGs. 2 and 3, an external device 10 in accordance with the present invention includes an external module 20 having a connection terminal 21, and a module housing 30. The external module 20 is accommodated in the module housing 30 in a manner such that the connection terminal 21 can be exposed to or drawn into the module housing 30 by rotating the external module 20 in the module housing 30. The module housing 30 rotatably accommodates the external module 20, and has an opening 35 on a side thereof. Therefore, by rotating the external module 20 about a hinge axis A1, the connection terminal 21 can be exposed to the outside through the opening 35 or drawn into the module housing 30 to be protected and hidden from the outside.

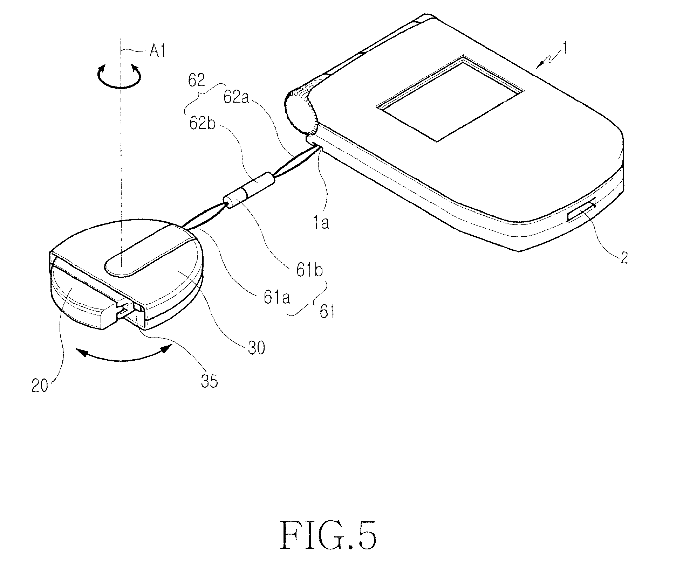

Referring to FIGs. 2 and 5, hinge means 40 for defining the hinge axis A1 and allowing the rotation of the external module 20 in the module housing 30 is arranged between the external module 20 and the module housing 30. The hinge means 40 includes hinge projections 41 and hinge grooves 42. The hinge projections 41 project from center portions on the upper and lower surfaces of the external module 20 to be rotatably received in the hinge grooves 42, and the hinge grooves 42 are defined in the module housing 30 to rotatably receive the hinge projections 41.

Referring to FIGs. 2, 4 and 6, clicking means 50 is provided to the hinge means 40 such that, when the hinge projections 41 are rotated integrally with the external module 20, friction occurs to provide a clicking effect. The clicking means 50 includes at least one clicking projection 51 and at least one friction groove 52. The clicking projection 51 is formed on the outer edge of each hinge projection 41 to be engaged in the friction groove 52 such that the clicking projection 51 is rotated integrally with the external module 20 to produce a frictional force. The friction groove 52 is defined in each hinge groove 42 to be engaged with the clicking projection 51 such that a frictional force is produced when the hinge projection 41 is rotated.

Referring to FIGs. 2, 5 and 7, the module housing 30 includes first and second housings 31 and 32. The first housing 31 is coupled to the second housing 32 and defines a rotation space 33 for allowing the rotation of the external module 20, and the second housing 32 is coupled to the first housing 31 and defines another rotation space 33 for allowing the rotation of the external module 20.

Referring to FIGs. 2, 3, 7 and 8, the module housing 30 has a connection member 60, which is connected to a ring 1 a provided to a main portable terminal 1. The connection member 60 has first and second connection elements 61 and 62. The first connection element 61 has one end 61 a which is connected to a ring 34 formed on the module housing 30 and the other end 61 b which is formed with a threaded locking portion 61 c to be threadedly locked with a threaded portion 62c formed on the second connection element 62. The second connection element 62 has one end 62a, which is connected to the ring 1a provided to the main portable terminal 1 and the other end 62b, which is formed with the threaded portion 62c to be threadedly locked to the threaded locking portion 61c of the first connection element 61. The connection member 60 allows the external device 10 to be used as a handstrap or an accessory of the main portable terminal 1.

Hereafter, the operations of the external device 10 in accordance with the present invention, constructed as mentioned above, will be described in detail with reference to FIGs. 2 through 8.

Referring to FIGs. 2 and 3, the external device 10 is composed of the external module 20 having the connection terminal 21 and the module housing 30. The module housing 30 is composed of the first and second housings 31 and 32. The first and second housings 31 and 32 are coupled to each other, and the external module 20 is rotatably accommodated in the rotation spaces 33 defined in the respective first and second housings 31 and 32.

Thereupon, the hinge projections 41, which project from the center portions on the upper and lower surfaces of the external module 20, are rotatably received in the hinge grooves 42, respectively, which are defined in the first and second housings 31 and 32.

In this state, as shown in FIG. 3, the connection member 60 is connected to the ring 34 formed on the module housing 30. The connection member 60 is composed of the first and second connection elements 61 and 62. One end 61 a of the first connection element 61 is connected to the ring 34 formed on the module housing 30. The threaded locking portion 61 c formed on the other end 61 b of the first connection element 61 is threadedly locked with the threaded portion 62c formed on the other end 62b of the second connection element 62. One end 62a of the second connection element 62 is connected to the ring 1 a formed on the main portable terminal 1.

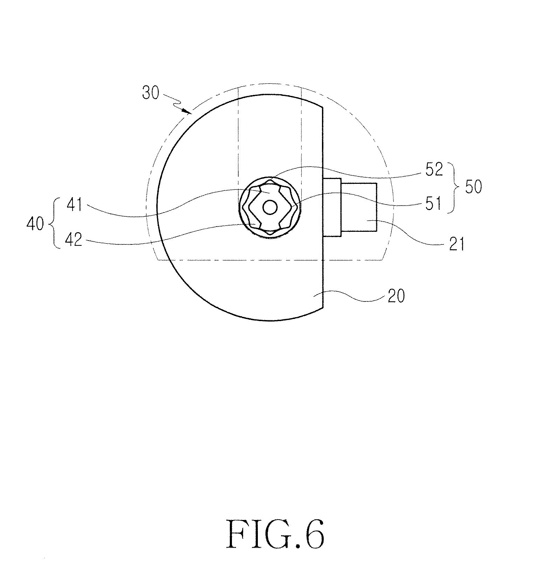

In this state, as shown in FIGs. 5 and 6, when a user wants to transmit the data stored in the main portable terminal 1 to the external device 10, a portion of the external module 20 which projects out of the opening 35 of the module housing 30 is rotated about the hinge axis A1.

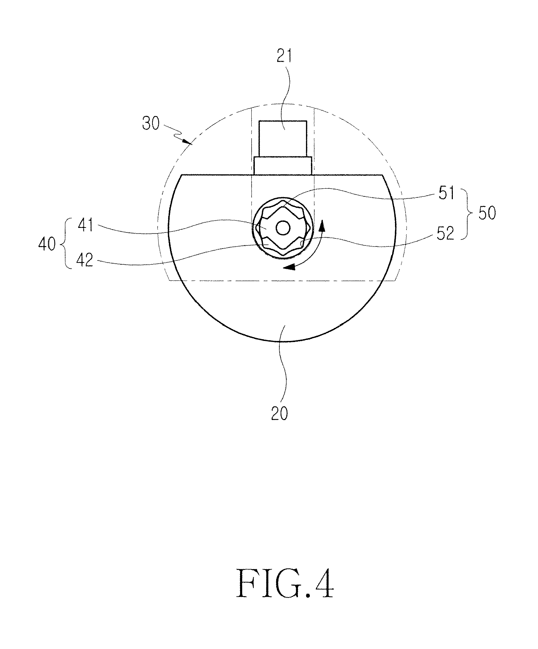

As shown in FIGs. 4 and 5, the clicking means 50 is provided to the hinge means 40 such that, when the hinge projections 41 are rotated integrally with the external module 20, friction occurs to provide a clicking effect. Thus, if the external module 20 is rotated about the hinge axis A1, the hinge projections 41 are rotated along with the external module 20, as a result of which the clicking projection 51 is brought into contact with the surface of the friction groove 52 defined in the hinge groove 42 and produces a frictional force to provide the clicking effect.

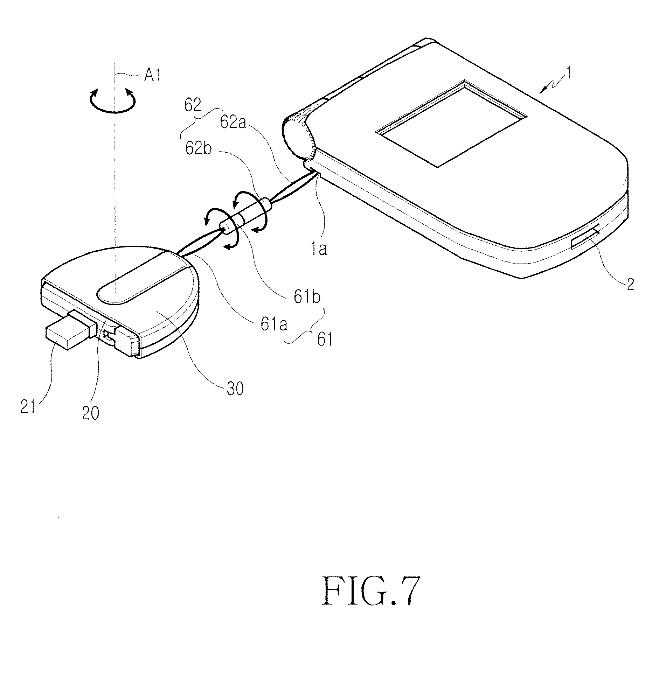

Referring to FIG. 7, as the external module 20 is rotated, the connection terminal 20, which is received in the rotation spaces 33 of the module housing 30 is exposed to the outside through the opening 35. Next, the threaded locking portion 61 c and the threaded portion 62c formed on the first and second connection elements 61 and 62 of the connection member 60 are rotated and decoupled from each other.

In succession, the connection terminal 21 of the external module 20 is fitted into and electrically connected to the interface connector 2, which is provided to the main portable terminal 1.

Here, the main portable terminal 1 indicates all terminals, which can be carried. Also, the connection terminal 21 can be electrically connected to the earphone terminal (not shown) provided to the main portable terminal 1.

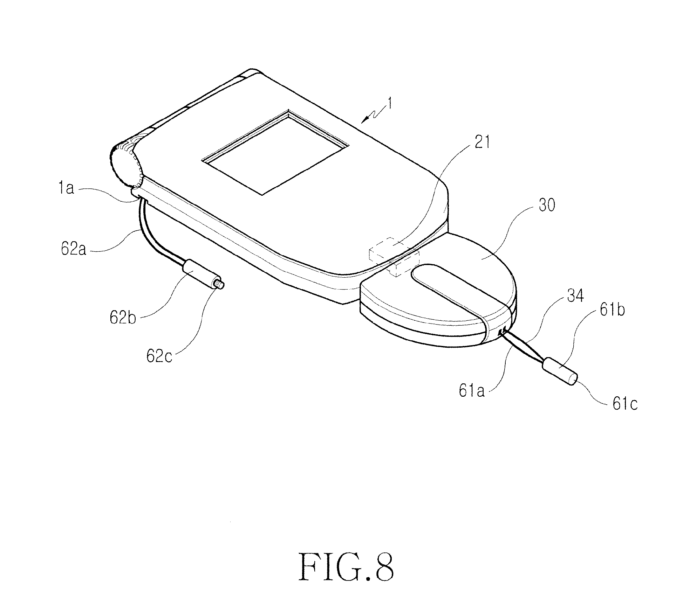

Referring to FIGs. 3 and 8, after the data is transmitted from the main portable terminal 1 to the external device 10, the external device 10 is disconnected from the interface connector 2 of the main portable terminal 1. Then, as the external module 20 is rotated about the hinge axis A1, the connection terminal 21 is also rotated along with the external module 20 and is drawn into the rotation spaces 33 of the module housing 30.

In this state, as shown in FIG. 7, the threaded locking portion 61 c of the first connection element 61 is threadedly locked with the threaded portion 62c of the second connection element 62. Thus, as shown in FIG. 3, the external device 10 can be used as a hand strap or an accessory of the main portable terminal 1 by virtue of the connection member 60.

As is apparent from the above descriptions, the external device according to the present invention provides advantages in that, since the external device can be carried along with a portable terminal, portability of the external device is improved, and since a connection terminal can be exposed to or hidden from the outside by rotating an external module, it is possible to prevent the connection terminal from being damaged.

While the invention has been shown and described with reference to certain preferred embodiments thereof, it will be understood by those skilled in the art that various changes in form and details may be made therein without departing from the scope of the invention as defined by the appended claims.

## Claims

1. An external device comprising:
an external module having a connection terminal; and
a module housing for rotatably accommodating the external module, and having an opening on a side thereof,
wherein, when the external module is rotated about a hinge axis, the connection terminal is exposed to the outside through the opening or drawn into the module housing to be hidden from the outside.

2. The external device as set forth in claim 1, wherein hinge means for defining the hinge axis and allowing rotation of the external module in the module housing is arranged between the external module and the module housing.

3. The external device as set forth in claim 2, wherein the hinge means comprises hinge projections, which project from center portions on upper and lower surfaces of the external module, and hinge grooves which are defined in the module housing to rotatably receive the hinge projections.

4. The external device as set forth in claim 3, wherein clicking means is provided to the hinge means such that, when the hinge projections are rotated integrally with the external module, friction occurs to provide a clicking effect.

5. The external device as set forth in claim 4, wherein the clicking means comprises at least one clicking projection which is formed on an outer edge of each hinge projection, and at least one friction groove, which is defined in each hinge groove and engaged with the clicking projection to produce a frictional force when the hinge projection is rotated.

6. The external device as set forth in one of claims 1 to 5, wherein the module housing comprises first and second housings, and rotation spaces are defined in the first and second housings to allow rotation of the external module.

7. The external device as set forth in one of claims 1 to 6, wherein the module housing has a connection member, which is connected to a ring provided to a main terminal.

8. The external device as set forth in claim 7, wherein the connection member has first and second connection elements; the first connection element has one end which is connected to a ring formed on the module housing and an other end which is formed with a threaded locking portion; and the second connection element has one end which is connected to the ring provided to the main terminal and an other end which is formed with a threaded portion to be threadedly locked to the threaded locking portion of the first connection element.

9. The external device as set forth in claim 7 or 8, wherein the external device is used as one of a hand strap and an accessory of the main terminal by virtue of the connection member.
